# EUROPÄISCHE PATENTSCHRIFT

(11) **EP 1 731 582 B1**
(45) Veröffentlichungstag und Bekanntmachung des Hinweises auf die Patenterteilung: **06.04.2011**
(21) Anmeldenummer: 06011177.0
(22) Anmeldetag: 31.05.2006
(51) Int. Cl.: C09D 175/04, C08L 75/04

(54) **Oligocarbonat-haltige Beschichtungsmittel für kratzfeste Decklacke**
Coating agent comprising oligocarbonate for scratch-resistant finishing lacquer
agent de revetement comprenant un oligocarbonate pour laque de finition

(30) Priorität: 10.06.2005 DE 102005026863
(43) Veröffentlichungstag der Anmeldung: 13.12.2006
(73) Patentinhaber: Bayer MaterialScience AG, 51368 Leverkusen (DE)
(72) Erfinder: Hofacker, Steffen, Dr., 51519 Odenthal (DE); Wamprecht, Christian, Dr., 41472 Neuss (DE); Mechtel, Markus, Dr., 51467 Bergisch Gladbach (DE); Yuva, Nusret, 51399 Burscheid (DE)

(56) Entgegenhaltungen:
- EP-A- 0 373 447
- EP-A- 0 819 710
- US-A- 3 637 909
- US-A1- 2004 019 142

## Beschreibung

Die vorliegende Erfindung betrifft neue Beschichtungsmittel aus Polyisocyanaten, aliphatischen Oligocarbonatpolyolen und Polyacrylatpolyolen, ein Verfahren zu ihrer Herstellung und deren Verwendung zur Herstellung von Überzügen.

Kratzfeste Decklacke, vor allem für den Automobildecklackbereich sowie für Autoreparaturlackierung sind bereits seit vielen Jahren von großem Interesse. Neben der Eigenschaft, dass derartige Decklacke eine geringe Verkratzungsneigung zum Beispiel in einer Automobilwaschstraße aufweisen sollen, gelten ferner die Forderungen, dass auch eine ausgeprägte Lösemittel- und Säurebeständigkeit dieser Lacksysteme gegeben sein muss.

So haben sich vor allem in den letzten Jahren 2-komponentige Polyurethansysteme auf dem Markt durchgesetzt, welche sich vor allem durch gute Beständigkeiten gegen Lösemittel und Chemikalien bei gleichzeitig guter Kratzbeständigkeit und ausgezeichneter Witterungsbeständigkeit auszeichnen.

Oftmals werden Polyacrylate ggf. in Abmischung mit Polyestern als Polyolbindemittel in solchen Systemen eingesetzt. Als Vernetzer dienen hauptsächlich aliphatische und/oder cycloaliphatische Polyisocyanate auf Basis von Hexamethylendiisocyanat und Isophorondiisocyanat.

Diese 2K Polyurethanbeschichtungsmittel haben ein sehr gutes Gesamteigenschaftsniveau erreicht, allerdings beobachtet man vor allem bei dunklen Farbtönen häufig eine Verkratzung des Klarlacks nach häufigen Waschgängen in Waschstraßen. Je nach Elastizitätseinstellung der Lackschicht bilden sich die Kratzer mit der Zeit zurück, man spricht vom sogenannten Reflow. Erhöht man jedoch zur Verbesserung des Reflow-Verhaltens die Elastizität der Klarlackschicht, so verliert der Lack an Oberflächenhärte und es verschlechtert sich vor allem die Lösemittel- und Chemikalienbeständigkeit, insbesondere die Säurebeständigkeit [Carl Hanser Verlag, München, MO Metalloberfläche 54 (2000) 60-64]. So gibt es im Stand der Technik Bemühungen, die Kratzfestigkeit von 2 K PUR-Lacken durch Erhöhung der Elastizität der Polyolkomponente zu verbessern, hauptsächlich durch Kombinationen aus Polyacrylaten und elastischeren Polyestern.

Die DE-A 198 24 118 beschreibt lösemittelarme Bindemittel auf Polyester-Acrylatbasis, die mit Di- und/oder Polyisocyanaten zu schnell trocknenden Beschichtungen mit guter Haftung ausgehärtet werden können. Aufgrund des hohen Polyesteranteils jedoch weisen diese nur eine unzureichende Säurebeständigkeit auf und sind für den Einsatz in Automobildecklacken ungeeignet.

Die WO 96/20968 beschreibt ein Beschichtungsmittel für Automobile und Lastkraftwagen, das ein Polyacrylat auf Basis von alkylsubstituierten cycloaliphatischen (Meth)acrylatmonomeren oder alkylsubstituierten aromatischen Vinylmonomeren, einen multihydroxyfunktionellen Oligoester und ein Polyisocyanat enthält. Da die Oligoester allerdings herstellbedingt neben primären auch eine größere Anzahl an sekundären Hydroxylgruppen aufweisen und für niedrigviskose Beschichtungsmittel (< 3000 mPa·s / 23°C) sehr hohe Mengen dieser Ester (> 60 Gew.-% bezogen auf die Gesamtformulierung) eingesetzt werden müssen, härten diese nur sehr langsam und bei höheren Temperaturen aus, so dass sie für temperaturempfindliche Substrate ungeeignet sind.

EP-A 0 896 991 beschreibt Beschichtungsmittel auf Basis von Polyacrylat-Polyester-Mischungen mit Polyesteranteilen ≤ 10 Gew.-% und Hydroxylzahlen von 40 bis 125 mg KOH/g. Aufgrund der resultierenden niedrigen Vernetzungsdichte weisen daraus hergestellte PUR-Lacke keine ausreichenden Lösemittel- und Chemikalien auf. Darüber hinaus ist die Viskosität mit 3000 bis 5000 mPas / 23°C bei einem Festkörpergehalt von 70 Gew.-% für die Formulierung festkörperreicher PUR-Lacke zu hoch.

Im Stand der Technik wie in EP 1 101 780 A, EP 819 710 A und EP 778 298 A wird oftmals pauschal der Einsatz von Mischungen von Polyacrylaten mit anderen Polyolen, wie Polyestern und/öder Polycarbonaten als Polyolbindemittel und Reaktionspartner für Polyisocyanatvernetzer in 2K PUR-Lacken erwähnt, ohne jedoch auf die speziellen Vorteile gerade dieser Mischungen einzugehen. Ferner werden keine Angaben über die mengenmäßige Zusammensetzung sowie das Molekulargewicht und die OH-Funktionalität des Polycarbonatpolyols solcher Mischsysteme gemacht.

Aufgabe der vorliegenden Erfindung war es daher, neue Beschichtungsmittel zur Verfügung zu stellen, die eine Verbesserung der Kratzfestigkeit aufweisen, ohne dabei die Säure- und Lösemittelbeständigkeit der Decklacksysteme negativ zu beeinflussen.

Es wurde gefunden, dass durch Verwendung von Oligocarbonatpolyolen in bestimmten Kombination mit Polyacrylatpolyolen und Polyisocyanaten, Beschichtungsmittel hergestellt werden können, die eine deutlich verbesserte Kratzbeständigkeit aufweisen, bei gleichzeitiger Verbesserung der Lösemittel- und Säurebeständigkeiten.

Gegenstand der Erfindung sind daher Beschichtungsmittel, enthaltend
A) eine Polyolkomponente, die aus
   a) 1 bis 50 Gew.-% an aliphatischen Oligocarbonatpolyolen mit einem zahlenmittleren Molekulargewicht Mₙ von 200 bis 2000 g/mol und
   b) 50 bis 99 Gew.-% an hydroxyfunktionellen Polyacrylatpolyole besteht und
B) ein oder mehrere gegenüber OH-Gruppen reaktive (Poly)Isocyanatvemetzer mit einer mittleren NCO-Funktionalität von ≥ 2,0:

Die Menge von a) und b) zusammen addiert sich dabei zu 100 Gew.-%.

Bevorzugt werden in a) aliphatische Oligocarbonatpolyole eingesetzt, die ein zahlenmittleres Molekulargewicht von 200 bis 2 000 g/mol, besonders bevorzugt 200 bis 1 000 g/mol aufweisen.

Bevorzugt werden in a) aliphatische Oligocarbonatpolyole der vorstehend genannten Art eingesetzt, die eine OH-Funktionalität von 1,5 bis 5, besonders bevorzugt 1,7 bis 3, ganz besonders bevorzugt 1,9 bis 2,5 haben.

Bevorzugt beträgt die Menge der Komponente a) 1 bis 20 Gew.-% und die der Komponente b) 80 bis 99 Gew.-%, besonders bevorzugt wird a) in Mengen von 1 bis 10 Gew.-% und b) in Mengen von 90 bis 99 Gew.-% eingesetzt.

Die Herstellung der in a) eingesetzten aliphatischen Oligocarbonatpolyole kann durch Umesterung von monomeren Dialkylcarbonaten wie Dimethylcarbonat, Diethylcarbonat etc. mit Polyolen mit einer OH-Funktionalität ≥ 2,0 wie 1,4-Butandiol, 1,3-Butandiol, 1,5-Pentandiol, 1,6-Hexandiol, 3-Methyl-1,5-Pentandiol, 1,12-Dodecandiol, Cyclohexandimethanol, Trimethylolpropan, etc. erfolgen und ist beispielhaft in EP 1 404 740 B1 Bsp. 1 bis 5, EP 1 477 508 A1 Bsp. 3 beschrieben.

Für die erfindungsgemäßen Beschichtungsmittel werden aliphatische Oligocarbonatdiole mit einem Molekulargewicht von 200 bis 2 000 g/mol basierend auf 1,4-Butandiol, 1,6-Hexandiol, 3-Methyl-1,5-Pentandiol, Cyclohexandimethanol oder deren Mischungen eingesetzt.

Die eingesetzten Polyacrylatpolyole b) sind erhältlich, indem nach dem Fachmann bekannten Methoden
b1) 0 bis 10 Gew.-% eines oder mehrerer gegebenenfalls funktioneller Polybutadiene mit einem zahlenmittleren Molekulargewicht von 500 bis 10.000 g/mol und mit einem Anteil an 1,2-seitenständigen vinylischen Doppelbindungen von mindestens 10 Mol.-% bezogen auf alle enthaltenen vinylischen Doppelbindungen des Polybutadiens,
b2) 1 bis 30 Gew.-% eines oder mehrerer ungesättigter, aromatischer Monomere ausgewählt aus der Gruppe Styrol, α-Methylstyrol und Vinyltoluol,
b3) 20 bis 80 Gew.-% eines oder mehrerer Hydroxyalkylester der Acryl- oder Methacrylsäure mit primären Hydroxylgruppen,
b4) 0 bis 30 Gew.-% eines oder mehrerer cycloaliphatischer Ester aus Acryl- oder Methacrylsäure und C₃ bis C₁₂ Monoalkoholen,
b5) 10 bis 60 Gew.-% eines oder mehrerer aliphatischer Ester aus Acryl- oder Methacrylsäure und C₁ bis C₈ Monoalkoholen,
b6) 0,1 bis 5 Gew.-% einer oder mehrerer α,β-ungesättigter C₃ - C₇ Mono- oder Dicarbonsäuren oder eines oder mehrerer Halbester der Maleinsäure- oder Fumarsäure und C₁ bis C₁₄ Monoalkoholen und
b7) 0 bis 30 Gew.-% weiterer von den Verbindungen der Komponenten b1) bis b6) verschiedener copolymerisierbarer Verbindungen,
miteinander copolyinerisiert werden und wobei die Summe der Gew.-% der Komponenten b1) bis b7) 100 Gew.-% ist.

Bevorzugt bestehen die Copolymerisate der Komponente b) aus
b1) 0,1 bis 8 Gew.-% eines oder mehrerer, gegebenenfalls funktioneller, Polybutadiene mit einem zahlenmittleren Molekulargewicht von 500 bis 5.000 g/mol und mit einem Anteil an 1,2-seitenständigen vinylischen Doppelbindungen von mindestens 20 Mol-% bezogen auf alle enthaltenen vinylischen Doppelbindungen des Polybutadiens,
b2) 2 bis 28 Gew.-% Styrol,
b3) 25 bis 70 Gew.-% einer oder mehrerer Verbindungen der Gruppe bestehend aus Hydroxyethylacrylat, Hydroxyethylmethacrylat und Butandiol-1,4-monoacrylat,
b4) 0 bis 25 Gew.-% einer oder mehrerer cycloaliphatischer Ester aus Acryl- oder Methacrylsäure und C₃ bis C₁₂ Monoalkoholen,
b5) 15 bis 60 Gew.-% einer oder mehrerer Ester aus Acryl- oder Methacrylsäure und aliphatischen C₁ bis C₈ Monoalkoholen,
b6) 0,3 bis 4 Gew.-% einer oder mehrerer Verbindungen der Gruppe bestehend aus Acrylsäure, Methacrylsäure, Maleinsäurehalbestern und Fumarsäürehalbestern aus den entsprechenden Säuren und C₁ bis C₈ Monoalkoholen und
b7) 0 - 25 Gew.-% einer oder mehrerer Verbindungen der Gruppe bestehend aus Acrylnitril, Methacrylnitril, Hydroxypropyl(meth)acrylat, Vinylester aliphatischer, gegebenenfalls verzweigter C₁ - C₁₀ Monocarbonsäuren, Dialkyl- oder Dicycloalkylester aus Malein- oder Fumarsäure und C₃ bis C₈ Monoalkoholen,
wobei die Summe der Gew.-% der Komponenten b1) bis b7) 100 Gew.-% beträgt.

Besonders bevorzugt bestehen die Copolymerisate der Komponente b) aus
b1) 0,2 bis 6,0 Gew.-% eines oder mehrerer, gegebenenfalls funktioneller, Polybutadiene mit einem zahlenmittleren Molekulargewicht von 500 bis 3.000 g/mol und mit einem Anteil an 1,2-seitenständigen vinylischen Doppelbindungen von mindestens 30 Mol-% bezogen auf alle enthaltenen vinylischen Doppelbindungen des Polybutadiens,
b2) 5 bis 25 Gew.-% Styrol,
b3) 30 bis 65 Gew.-% Hydroxyethylacrylat, Hydroxyethylmethacrylat oder deren Mischungen,
b4) 0 bis 20 Gew.-% einer oder mehrerer Verbindungen der Gruppe bestehend aus Isobornylacrylat, Isobornylmethacrylat, Cyclohexyl(meth)acrylat, 3,5,5-Trimethylcyclohexyl(meth)-acrylat, 4-tert.-Butylcyclohexyl(meth)acrylat,
b5) 20 bis 50 Gew.-% eines oder mehrerer Ester aus Acryl- oder Methacrylsäure und aliphatischen C₁ bis C₈ Monoalkoholen,
b6) 0,5 bis 3 Gew.-% Acrylsäure, Methacrylsäure oder deren Mischungen,
b7) 0 bis 20 Gew.-% einer oder mehrerer Verbindungen der Gruppe bestehend aus Acrylnitril, Methacrylnitril, Hydroxypropyl(meth)acrylat, Vinylester aliphatischer, gegebenenfalls verzweigter C₁ - C₁₀ Monocarbonsäuren und Dialkyl- oder Dicycloalkylester aus Malein- oder Fumarsäure und C₃ bis C₈ Monoalkoholen,
wobei die Summe der Gew.-% der Komponenten b1) bis b7) 100 Gew.-% beträgt.

Ganz besonders bevorzugt bestehen die Copolymerisate der Komponente b) aus
b1) 0,4 bis 5 Gew.-% eines oder mehrerer, gegebenenfalls funktioneller, Polybutadiene mit einem zahlenmittleren Molekulargewicht von 500 bis 2.000 g/mol und mit einem Anteil an 1,2-seitenständigen vinylischen Doppelbindungen von mindestens 40 Mol.-% bezogen auf alle enthaltenen vinylischen Doppelbindungen des Polybutadiens,
b2) 5 bis 20 Gew.-% Styrol,
b3) 30 bis 60 Gew.-% Hydroxyethylacrylat, Hydroxyethylmethacrylat oder deren Mischungen,
b4) 0 bis 15 Gew.-% einer oder mehrerer Verbindungen der Gruppe bestehend aus Isobornylacrylat, Isobornylmethacrylat, Cyclohexyl(meth)acrylat, 3,5,5-Trimethylcyclohexyl(meth)-acrylat und 4-tert.-Butylcyclohexyl(meth)acrylat,
b5) 25 bis 45 Gew.-% eines oder mehrerer Esters aus Acryl- oder Methacrylsäure und aliphatischen C₁ bis C₄ Monoalkoholen,
b6) 0,5 bis 2 Gew.-% Acrylsäure, Methacrylsäure oder deren Mischungen und ,
b7) 0 bis 15 Gew.-% einer oder mehrerer der Verbindungen der Gruppe bestehend aus Hydroxypropyl(meth)acrylat, Vinylester aliphatischer, gegebenenfalls verzweigter C₁ bis C₉ Monocarbonsäuren, Dialkyl- oder Di(cyclo)alkylester aus Malein- oder Fumarsäure und C₃ bis C₆ Monoalkoholen,
wobei die Summe der Gew.-% der Komponenten b1) bis b7) 100 Gew.-% beträgt.

Die Herstellung des Harzes der Komponente b) wird durch Copolymerisation der Bestandteile b1) bis b7) nach üblichen, dem Fachmann vertrauten Methoden durchgeführt [Houben-Weyl (Hrsg.): Methods of Organic Chemistry, 4th ed., E 20/2. Thieme, Stuttgart 1987, S. 1156], wobei eine radikalische Lösungspolymerisation der Komponenten a1) bis b7) bei Temperaturen von 140 bis 240°C in Gegenwart von Radikalbildnern bevorzugt ist.

Die Monomeren bzw. Oligomeren b1) bis b7) werden im Allgemeinen in den gleichen Verhältnissen, wie sie zur Polymerisation eingesetzt werden, in das Copolymerisat eingebaut. Die eingebauten Einheiten sind im Wesentlichen statistisch verteilt.

Als Ausgangsmaterialien b1) für die erfindungswesentlichen Copolymerisate b) sind grundsätzlich alle Polybutadiene mit einem zahlenmittleren Molekulargewicht von 500 - 10.000 g/mol geeignet, die einen Anteil an vinylischen Doppelbindungen in seitenständiger 1,2-Position von mindestens 10 Mol.-%, bevorzugt mindestens 20 Mol.-%, besonders bevorzugt mindestens 40 Mol.-%, bezogen auf alle in dem Polybutadien enthaltenen Vinyldoppelbindungen, besitzen.

Typischerweise werden als Verbindungen der Komponente b1) Polybutadien-Isomerengemische eingesetzt, deren vinylische Doppelbindungen zu 10 bis 90 Mol.-% in 1,2-Stellung sind, zu 10 bis 70 Mol.-% in 1,4-cis und/oder 1,4-trans-Stellung sind und zu 0 bis 30 Mol.-% in cyclischen Strukturen vorliegen.

Die eingesetzten Polybutadiene können gegebenenfalls auch funktionelle Gruppen, wie beispielsweise Hydroxylgruppen oder Carboxylgruppen, tragen.

Eine Übersicht geeigneter Polybutadiene der vorstehend genannten Art ist in "Makromoleküle" von H. G. Elias, 4. Auflage, Hüthig und Wepf-Verlag, Basel, Heidelberg, New York, Seiten 676 sowie 744 bis 746 und 1012 ff. gegeben.

Die Herstellung der Copolymerisate b) kann in Gegenwart eines Lösungsmittels durchgeführt werden. Hierfür eignen sich beispielsweise aliphatische, cycloaliphatische und/oder aromatische Kohlenwasserstoffe, wie Alkylbenzole, z.B. Toluol, Xylol; Ester, wie Ethylacetat, n-Propylacetat, Isopropylacetat, n-Butylacetat, n-Hexylacetat, 2-Ethylhexylacetat, Ethylpropionat, Butylpropionat, Pentylpropionat, Ethylenglykolmonoethyletheracetat, das entsprechende Methyletheracetat; Ether wie Ethylenglykolacetatmonomethyl-, -ethyl- oder -butylether; Ketone wie Aceton, Methylethylketon, Methylisobutylketon, Methyl-n-amylketon oder Gemische derartiger Lösemittel.

Die Herstellung der Copolymerisate b) kann kontinuierlich oder diskontinuierlich erfolgen.

Bei kontinuierlicher Herstellung wird in einen Polymerisationsreaktor gleichmäßig und kontinuierlich die Monomermischung und der Initiator eindosiert und gleichzeitig die entsprechende Menge Polymerisat kontinuierlich abgeführt, so dass sehr einheitliche Copolymere erhalten werden.

Bei einer diskontinuierlichen Herstellung werden Monomermischung und Initiator in den Polymerisationsreaktor eindosiert, wobei das Polymerisat im Reaktor verbleibt. Um möglichst einheitlich aufgebaute Copolymere zu erhalten, werden Monomermischung und Initiator mit konstanter Geschwindigkeit in den Reaktor eindosiert.

Unter einheitlichen Copolymeren im Sinne der Erfindung werden Copolymerisate mit enger Molekulargewichtsverteilung und einer geringen Uneinheitlichkeit (M_{w}/Mₙ -1 von bevorzugt ≤ 2,5 sowie nahezu gleicher Monomerzusammensetzung der Molekülketten verstanden.

Im Allgemeinen erfolgt die Copolymerisation im Temperaturbereich von 140 bis 240°C, vorzugsweise 145 bis 220°C und besonders bevorzugt 150 bis 200°C.

Die Copolymerisation kann dabei unter einem Druck von bis zu 15 bar durchgeführt werden.

Die Initiatoren werden in Mengen von 0,05 bis 15 Gew.-%, vorzugsweise 1 bis 10 Gew.-%, insbesondere 2 bis 8 Gew.-%, bezogen auf die Gesamtmenge der Komponenten b1) bis b7), eingesetzt. Geeignete Initiatoren zur Herstellung der Copolymerisate b) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 30 Minuten besitzen. Geeignet sind beispielsweise 2,2'-Azobis-(2-methylpropannitril), 2,2'-Azobis-(2-methylbutannitril), 1,1'-Azobis(cyclohexan-carbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butyl-peroxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

In einer besonderen Ausführungsform werden die Polyacrylatpolyole in Gegenwart mindestens eines der Oligocarbonatpolyole a) nach den oben beschriebenen Verfahren hergestellt. Dabei kann die Polymerisation sowohl in Abwesenheit von organischen Lösemittel erfolgen, wobei das Oligocarbonatpolyol das Reaktionsmedium für die radikalische Polymerisation darstellt, als auch in Mischungen aus organischen Lösemitteln und Oligocarbonatpolyolen a).

Bei den gegenüber OH-Gruppen reaktiven (Poly)Isocyanatvernetzern B) handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-DÜsocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen.

Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Ferner ist es ebenso möglich so genannte blockierte Polyisocyanate und/oder Isocyanate, bevorzugt blockierte Polyisocyanate bzw. Polyisocyanatgemische, ganz besonders bevorzugt blockierte Polyisocyanate bzw. Polyisocyanatgemische mit Isocyanuratstruktur auf Basis von HDI, IPDI und/oder 4,4'-Diisocyanatodicyclohexylmethan einzusetzen.

Die Blockierung von (Poly)Isocyanaten zum zeitweisen Schutz der Isocyanatgruppen ist eine seit langem bekannte Arbeitsmethode und wird z.B. in Houben Weyl, Methoden der organischen Chemie XIV/2, S. 61-70 beschrieben.

Als Blockierungsmittel kommen alle Verbindungen in Betracht, die bei Erhitzen des blockierten (Poly)Isocyanats ggf. unter Anwesenheit eines Katalysators abgespalten werden können. Geeignete Blockierungsmittel sind z.B. sterisch anspruchsvolle Amine wie Dicyclohexylamin, Diisopropylamin, N-tert-Butyl-N-benzylamin, Caprolactam, Butanonoxim, Imidazole mit den verschiedenen denkbaren Substitutionsmustern, Pyrazole wie 3,5-Dimethylpyrazol, Triazole und Tetrazole, ebenso Alkohole wie Isopropanol, Ethanol. Daneben besteht auch die Möglichkeit, die Isocyanatgruppe so zu blockieren, dass bei einer Weiterreaktion nicht das Blockierungsmittel abgespalten wird, sondern die intermediär gebildete Zwischenstufe abreagiert. Dies ist insbesondere beim Cyclopentanon-2-carboxyethylester der Fall, der bei der thermischen Vernetzungsreaktion vollständig in das polymere Netzwerk einreagiert und nicht wieder abgespalten wird.

Besonders bei der Verwendung blockierter Polyisocyanate können ebenfalls weitere, reaktive Verbindungen, welche gegenüber OH- oder NH-Gruppen reaktive Gruppen aufweisen, als zusätzliche Vernetzerkomponenten neben Komponente B) eingesetzt werden. Beispielsweise sind dies Aminoplastharze.

Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Hydroxylgruppen entsprechend angepasst werden.

Als Katalysatoren für die Reaktion der Komponenten A) mit der Komponente B) zur Herstellung der erfindungsgemäßen Beschichtungsmittel können Katalysatoren wie handelsübliche Organometallverbindungen der Elemente Aluminium, Zinn, Zink, Titan, Mangan, Eisen, Bismut oder auch Zirkonium wie Dibutylzinnlaurat, Zinkoctoat, Titantetraisopropylat verwendet werden. Darüber hinaus eignen sich aber auch tertiäre Amine wie z.B. 1,4-Diazabicyclo-[2.2.2]-octan.

Ferner ist es möglich, die Umsetzung der Komponente B) mit Komponente A) zu beschleunigen, indem die Aushärtung bei Temperaturen zwischen 20 und 200°C, bevorzugt zwischen 60 und 180°C, besonders bevorzugt zwischen 70 und 150°C durchgeführt wird.

Neben der erfindungswesentlichen Polyolmischung A) können auch weitere dem Fachmann aus der Polyurethanlacktechnologie bekannte, organische Polyhydroxylverbindungen oder aminischen Reaktivverdünner eingesetzt werden.

Bei diesen anderen Polyhydroxylverbindungen kann es sich um die üblichen Polyester-, Polyether-, Polyurethan- oder um weitere, bisher nicht beschriebenen Polycarbonat- und Polyacrylatpolyole handeln. Vorzugsweise werden als weitere organische Polyhydroxylverbindungen, falls solche überhaupt neben der erfindungswesentlichen Polyolkomponente A) zum Einsatz gelangen, die an sich bekannten Polyacrylatpolyole und/oder Polyesterpolyole des Standes der Technik eingesetzt. Bei den aminischen Reaktiwerdünnern kann es sich um Produkte mit blockierten Aminogruppen; wie Aldimine oder Ketimine, oder um solche, die noch freie, jedoch in ihrer Reaktivität abgeschwächte Aminogruppen aufweisen, wie Asparaginsäureester, handeln. In aller Regel weisen die aminischen Reaktivverdünner mehr als eine (blockierte) Aminogruppe auf, sodass sie bei der Vernetzungsreaktion zum Aufbau des polymeren Lackfilmnetzwerkes beitragen.

Falls neben der erfindungsgemäßen Polyolkomponente A) weitere Polyhydroxylverbindungen oder aminische Reaktivverdünner der vorstehend genannten Art eingesetzt werden, beträgt der Anteil dieser zusätzlichen gegenüber Isocyanaten reaktiven Verbindungen maximal 50 Gew.-%, vorzugsweise maximal 30 Gew.-% bezogen auf die Menge der erfindungswesentlichen Komponente A). Besonders bevorzugt wird jedoch die erfindungswesentliche Polyolkomponente A) als alleinige Polyolkomponente in den erfindungsgemäßen Beschichtungsmitteln eingesetzt.

Das Verhältnis von Komponente B) zu Komponente A) und ggf. weiteren Vernetzern und Härtern wird dabei so bemessen, dass ein NCO/OH-Verhältnis der freien und gegebenenfalls blockierten NCO-Gruppen zu den isocyanatreaktiven Gruppen von 0,3 bis 2, bevorzugt 0,4 bis 1,5, besonders bevorzugt 0,5 bis 1,2 resultiert.

In den erfindungswesentlichen Beschichtungsmitteln können zusätzlich zu den erfindungswesentlichen Komponenten A) und B) auch in der Beschichtungstechnologie übliche Hilfsstoffe, wie anorganische oder organische Pigmente, weitere organische Lichtschutzmittel, Radikalfänger, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und weitere Katalysatoren mit verwendet werden.

Die erfindungsgemäßen Beschichtungsmittel kommen vorzugsweise in den Bereichen Kunststofflackierung, allgemeine Industrielackierung, Großfahrzeuglackierung, Autoreparaturlackierung, Autoersttackierung, Bodenbeschichtung und/oder Holz-/Möbellackierung zur Anwendung.

Gegenstand sind daher auch Beschichtungen und beschichtete Substrate, die unter Einsatz der erfindungsgemäßen Beschichtungsmittel erhältlich sind.

### Beispiele:

Desmophen^{®} A 870: hydroxylgruppenhaltiges Polyacrylat der Firma Bayer MaterialScience AG, Leverkusen, DE; ca. 70%ig in Butylacetat, Hydroxylgehalt nach DIN 53 240/2 ca. 2,95 %.

Desmophen^{®} VP LS 2971: elastifizierender, hydroxylgruppenhaltiger Polyester-Desmophen der Firma Bayer MaterialScience AG, Leverkusen, DE; ca. 80%ig in Butylacetat, Hydroxylgehalt nach DIN 53 240/2 ca. 3,8 %.

Desmodur^{®} N 3600: aliphatisches Polyisocyanurat der Firma Bayer MaterialScience AG, Leverkusen, DE; 100 Gew.-%ig, mit einem NCO-Gehalt nach DIN EN ISO 11909 von 23 Gew.-%

Desmodur^{®} N 3390 BA: aliphatisches Polyisocyanurat der Firma Bayer MaterialScience AG, Leverkusen, DE; 90 Gew.-%ig in n-Butylacetat mit einem NCO-Gehalt nach DIN EN ISO 11909 von 19,6 Gew.-%

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

### Beispiel 1

### Herstellung eines aliphatischen Oligocarbonatdiols auf Basis 1,6-Hexandiol mit einem zahlenmittleren Molekulargewicht von 1000 g/mol

In einem 5 1 Druckreaktor mit Destillationsaufsatz, Rührer und Vorlage wurden 2943 g 1,6-Hexandiol mit 0,7 g Ytterbium(III)acetylacetonat sowie 1051 g Dimethylcarbonat bei 80 °C vorgelegt. Anschließend wurde unter Stickstoffatmosphäre das Reaktionsgemisch in 2 h auf 150 °C aufgeheizt und dort unter Rühren und Rückfluss 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 1051 g Dimethylcarbonat bei 150 °C zu dem Reaktionsgemisch zugepumpt und dort unter Rühren und Rückfluss 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 841 g Dimethylcarbonat bei 150 °C zu dem Reaktionsgemisch zugepumpt und dort unter Rühren und Rückfluss 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluss daran wurde das Reaktionsgemisch innerhalb von 2 h auf 180 °C erhitzt und bei dieser Temperatur 2 h unter Rühren gehalten. Daran anschließend wurde die Temperatur auf 130 °C reduziert und ein Stickstoffstrom (5 l/h) durch das Reaktionsgemisch hindurchgeleitet, während der Druck auf 20 mbar abgesenkt wurde. Danach wurde die Temperatur binnen 4 h auf 180 °C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, wurde ein farbloses, wachsartiges Oligocarbonatdiol mit folgenden Kennzahlen erhalten:
Mₙ = 1035 g/mol; OH-Zahl = 108,2 mg KOH/g; Viskosität: 510 mPas bei 75°C.

### Beispiel 2

### Herstellung eines aliphatischen Oligocarbonatdiols auf Basis 3-Methyl-1,5-pentandiol mit einem zahlenmittleren Molekulargewicht von 650 g/mol

Vorgehen wie in Beispiel 1, wobei anstatt 1,6-Hexandiol 34092 g 3-Methyl-1,5-pentandiol und 8,0 g Ytterbium(III)acetylacetonat in einem 60 l Druckkessel vorgelegt wurden und Dimethylcarbonat in drei Schritten zu je zweimal 10223 g und einmal 7147 g zugegeben wurde.

Man erhielt ein farbloses, flüssiges Oligocarbonatdiol mit folgenden Kennzahlen: Mₙ = 675 g/mol; OH-Zahl = 166,0 mg KOH/g; Viskosität: 4146 mPas bei 23°C.

### Beispiel 3

### Herstellung eines aliphatischen Oligocarbonatdiols auf Basis Cyclohexandimethanol mit einem zahlenmittleren Molekulargewicht von 500 g/mol

Vorgehen wie in Beispiel 1, wobei anstatt 1,6-Hexandiol 3119 g Cyclohexandimethanol und Dimethylcarbonat in drei Schritten zu je zweimal 659 g und einmal 527 g zugegeben wurde.

Man erhielt ein farbloses, flüssiges Oligocarbonatdiol mit folgenden Kennzahlen: Mₙ = 518 g/mol; OH-Zahl = 216,4 mg KOH/g; Viskosität: 5700 mPas bei 75°C.

### Beispiel 4

### Herstellung eines aliphatischen Oligocarbonatdiols auf Basis Cyclohexandimethanol mit einem zahlenmittleren Molekulargewicht von 650 g/mol

Vorgehen wie in Beispiel 1, wobei anstatt 1,6-Hexandiol 2018 g Cyclohexandimethanol und Dimethylcarbonat in drei Schritten zu je zweimal 1101 g und einmal 881 g zugegeben wurde.

Man erhielt ein farbloses, flüssiges Oligocarbonatdiol mit folgenden Kennzahlen: Mₙ = 625 g/mol; OH-Zahl = 179,3 mg KOH/g; Viskosität: 14000 mPas bei 75°C.

### Beispiel 5

### Herstellung eines aliphatischen Oligocarbonatdiols auf Basis 3-Methyl-1,5-pentandiol mit einem zahlenmittleren Molekulargewicht von 500 g/mol

Vorgehen wie in Beispiel 1, wobei anstatt 1,6-Hexandiol 3018 g 3-Methyl-1,5-pentandiol und Dimethylcarbonat in drei Schritten zu je zweimal 835 g und einmal 668 g zugegeben wurde.

Man erhielt ein farbloses, flüssiges Oligocarbonatdiol mit folgenden Kennzahlen: Mₙ = 539 g/mol; OH-Zahl = 207,7 mg KOH/g; Viskosität: 2500 mPas bei 23°C.

### Beispiel 6:

### Herstellung eines aliphatischen Oligoesters auf Basis von Trimethylolpropan

In einen Reaktor gemäß Beispiel 7 wurden 3155 g Trimethylolpropan und 1345 g ε-Caprolacton und 2,2 g Dibutylzinndilaurat (DBTL) eingewogen. Der Kesselinhalt wurde auf 160°C aufgeheizt, 6 Stunden bei 160 °C gerührt und anschließend auf 20°C abgekühlt, wobei ein klares Harz mit folgenden Kenndaten erhalten wurde: Festgehalt: 99,5 Gew.-%, Viskosität bei 23°C: 4100 mPa·s, Säurezahl: 0,5 mg KOH/g, Hydroxylzahl: 881 mg KOH/g, Hydroxylgehalt: 26,7 Gew.-%, Hazen-Farbzahl: 44 APHA.

### Beispiel 7:

### Herstellvorschrift für die erfindungswesentlichen Copolymerisate A1 bis A7

In einem 5-1-Edelstahldruckreaktor mit Rührer, Destillationseinrichtung, Vorlagebehälter für Monomermischung und Initiator inklusive Dosierpumpen sowie automatischer Temperaturregelung wurde Teil 1 vorgelegt und auf die gewünschte Polymerisationstemperatur aufgeheizt. Dann wurden durch separate Zuläufe gemeinsam beginnend Teil 2 (Monomermischung) in 3 Stunden und Teil 3 (Initiatorlösung) in 3,5 Stunden zudosiert, wobei die Polymerisationstemperatur konstant (± 2 °C) gehalten wurde. Anschließend wurde 60 Minuten bei der Polymerisationstemperatur nachgerührt. Danach wurde, falls ein weiterer Teil 4 zum Einsatz kam, auf 80 °C abgekühlt, dieser Teil 4 zudosiert und 30 Minuten bei 80 °C gerührt. Dann wurde auf Raumtemperatur abgekühlt und der Festgehalt bestimmt. Die Copolymerisate sollten einen Festgehalt von 70 ± 1 % haben. Bei einem Festgehalt von ≤ 68 % wurde mit 5 % der ursprünglichen Initiatormenge bei 150 °C 30 Minuten nachaktiviert. Bei einem Festgehalt zwischen 68 und 69 % wurde auf 70 ± 1 % andestilliert. Danach wurde das Copolymerisat über einen Filter (Supra T5500, Porengröße 25 - 72 µm, Seitz-Filter-Werke GmbH, Bad Kreuznach, DE) filtriert. Die Zusammensetzungen der Teile 1 bis 4 sowie die Kenndaten der erhaltenen Produkte sind in der Tabelle 1 aufgeführt.

**Tabelle 1:**

| Copolymerisat | A1 | A2 | A3 | A4 | A5 | A6 | A7 |
|---|---|---|---|---|---|---|---|
| Teil 1 | | | | | | | |
| Butylacetat | 23,18 | 23,18 | 23,18 | 23,18 | - | - | - |
| Solventnaphtha 100¹⁾ | - | - | - | - | 22,49 | 22,49 | 24,28 |
| Oligocarbonatdiol aus Beispiel | 7,32 | 7,32 | 7,32 | 7,32 | - | - | - |
| Nr.: | (3) | (4) | (5) | (2) | | | |
| Teil 2 | | | | | | | |
| Styrol | 16,45 | 16,45 | 16,45 | 16,45 | 9,72 | 9,72 | 10,49 |
| Hydroxyethylmethacrylat | 30,13 | 30,13 | 30,13 | 30,13 | 19,64 | 19,64 | 21,19 |
| Butylacrylat | 15,26 | 15,26 | 15,26 | 15,26 | 30,15 | 30,15 | 32,55 |
| Polybutadien Nisso^{®} B 1000²⁾ | 0,66 | 0,66 | 0,66 | 0,66 | 0,86 | 0,86 | 0,93 |
| Acrylsäure | 0,66 | 0,66 | 0,66 | 0,66 | 0,98 | 0,98 | 1,05 |
| Teil 3 | | | | | | | |
| Di-tert.-butylperoxid | 2,64 | 2,64 | 2,64 | 2,64 | 2,56 | 2,56 | 2,76 |
| Butylacetat | 3,70 | 3,70 | 3,70 | 3,70 | 3,60 | 3,60 | 3,88 |
| Teil 4 | | | | | | | |
| Oligoester Beispiel Nr. 6 | - | - | - | - | 6,40 | 5,70 | 2,87 |
| Oligocarbonat Beispiel Nr. 2 | - | - | - | - | 0,70 | 1,40 | - |
| Solventnaphtha 100¹⁾ | - | - | - | - | 2,90 | 2,90 | - |
| Polymerisationstemperatur °C | 170 | 170 | 170 | 170 | 160 | 160 | 165 |
| Kenndaten | | | | | | | |
| Festgehalt, Gew.-% | 70,3 | 69,9 | 70,0 | 70,0 | 69,6 | 69,9 | 70,0 |
| Viskosität bei 23 °C, mPa·s | 3313 | 3503 | 2221 | 2642 | 3753 | 4754 | 4204 |
| Säurezahl, Lff., mg KOH/g | 8,2 | 7,8 | 8,3 | 7,7 | 8,9 | 8,8 | 9,5 |
| OH-Zahl, Lff. mg KOH/g | 143 | 144 | 149 | 132 | 132 | 134. | 113 |
| OH-Gehalt, fH, Gew.-% | 6,16 | 6,30 | 6,50 | 5,71 | 5,75 | 5,81 | 4,89 |
| Hazen-Farbzahl, APHA | 56 | 29 | 38 | 49 | 39 | 34 | 37 |

| | | | | | | | |
|---|---|---|---|---|---|---|---|
| Alle Mengenangaben sind in Gew.-% zu verstehen. ¹⁾ Handelsprodukt der DHC Solvent Chemie GmbH, D-45478 Mülheim an der Ruhr ²⁾ Handelsprodukt der Nippon Soda, Japan | | | | | | | |

### Anwendungstechnische Beispiele:

### Beispiel 8:

### Zubereitung des Stammlackes (Komponente 8A)

Zu 112,2 g Polyol A7 wurden 8,7 g des aliphatischen Oligocarbonatdiols aus Beispiel 2, 1,34 g Baysilone^{®} OL 17 (10 %-ige Lösung in MPA; Borchers GmbH, Langenfeld), 2,69 g Tinuvin^{®} 292 (50 %ige Lösung in MPA, Ciba Spezialitätenchemie Lampertheim GmbH, Lampertheim), 4,03 g Tinuvin^{®} 382/4 (50 %ige Lösung in MPA, Ciba Spezialitätenchemie Lampertheim GmbH, Lampertheim), 1,34 g Modaflow^{®} (1 %-ige Lösung in MPA; Brenntag AG, Mülheim/R), 26,21 g einer 1: 1 Mischung aus 1-Methoxypropylacetat-2 und Solventnaphtha 100 gegeben und innig verrührt.

### Zubereitung der Härterlösung (Komponente 8B)

Zu 47,2 g Desmodur^{®} N 3600 wurden 26,21 g einer 1: 1 Mischung aus 1-Methoxypropylacetat-2 und Solventnaphtha 100 gegeben und innig verrührt.

### Beispiele 9 - 13:

Gleiches Vorgehen wie in Beispiel 8A bzw. 8B. Es wurden jedoch die in Tabelle 2 aufgeführten Rohstoffe eingesetzt.

**Tabelle 2:**

| Stammlack | 9 A | 10 A | 11 A | 12 A | 13 A |
|---|---|---|---|---|---|
| Polyol | A1 | A2 | A3 | A4 | A5 |
| Einwaage [g] | 95,9 | 95,5 | 94,6 | 98,8 | 118,4 |
| Baysilone^{®} OL 17 (10% MPA) [g] | 1,07 | 1,07 | 1,07 | 1,07 | 1,34 |
| Tinuvin^{®} 292 (50% MPA) [g] | 2,14 | 2,14 | 2,14 | 2,14 | 2,69 |
| Tinuvin^{®} 382/4 (50% MPA) [g] | 3,22 | 3,22 | 3,22 | 3,22 | 4,03 |
| Modaflow^{®} (1% MPA) [g] | 1,07 | 1,07 | 1,07 | 1,07 | 1,34 |
| 1 -Methoxypropylacetat-2/Solvent-naphtha 100 (1:1) [g] | 26,2 | 26,0 | 26,2 | 25,7 | 25,3 |
| Härter | 9B | 10B | 11B | 12B | 13B |
| Desmodur^{®} N 3600 [g] | | | | | 51,36 |
| Desmodur^{®} N 3390 BA [g] | 44,14 | 44,9 | 45,53 | 42,27 | |
| 1-Methoxypropylacetat-2/Solvent-naphtha 100 (1:1) [g] | 26,2 | 26,0 | 26,2 | 25,7 | 25,3 |

| **Vergleichsbeispiel** | **1** | **2** | **3** | | |
|---|---|---|---|---|---|
| **Stammlack** | | | | | |
| Polyol A7 aus Tabelle 1 [g] | -- | -- | 16,2 | | |
| Oligocarbonatdiol aus Beispiel 2 [g] | -- | -- | 26,5 | | |
| Desmophen^{®} A.870 [g] | 64,6 | 86,9 | -- | | |
| Desmophen^{®} VP LS 2971 [g] | 18,9 | -- | -- | | |
| Baysilone^{®} OL 17 (10% Xylol) [g] | 0,9 | 0,9 | -- | | |
| Baysilone^{®} OL 17 (10% MPA) [g] | -- | -- | 0,6 | | |
| Tinuvin^{®} 292 (10% Xylol) [g] | 9,1 | 9,1 | -- | | |
| Tinuvin^{®} 292 (50% MPA) [g] | -- | -- | 1,2 | | |
| Tinuvin^{®} 1130 (10% Xylol) [g] | 18,1 | 18,1 | -- | | |
| Tinuvin^{®} 382/4 (50% MPA) [g] | -- | -- | 1,8 | | |
| Modaflow^{®} (1% Xylol) [g] | 0,9. | 0,9 | -- | | |
| Modaflow^{®} (1% MPA) [g] | -- | -- | 0,6 | | |
| 1-Methoxypropylacetat-2 / Solventnaphtha 100 (1:1) [g] | 11,9 | 8,7 | -- | | |
| Butylglycolacetat [g] | -- | 3,6 | -- | | |
| **Härter** | | | | | |
| Desmodur^{®} N 3390 BA [g] | 33,8 | 33,1 | 20,6 | | |
| 1-Methoxypropylacetat-2 / Solventnaphtha 100 (1:1) [g] | 11,9 | 8,6 | 32,6 | | |

### Vermischung des Stammlackes mit dem Härter und Applikation:

Die oben aufgeführten Komponenten A (Stammlack) und B (Härter) wurden jeweils zusammengemischt und innig verrührt. Anschließend wurden die Mischungen jeweils mit einer Luftpistole auf mit schwarzem Basislack vorbeschichtete Coil Coat Bleche appliziert, 10 min bei Raumtemperatur abgelüftet und anschließend 30 min. bei 140°C im Umluftofen eingebrannt. Es wurden brillante, hochglänzende Beschichtungen mit einer Trockenfilmschichtdicke von ca. 40 µm erhalten. Eine Übersicht über die ermittelten lacktechnischen Eigenschaften der Beschichtungen ist in Tabelle 3 dargestellt.

**Tabelle 3: Lacktechnische Eigenschaften von Beschichtungen**

| **Beispiel** | **8** | **9** | **10** | **11** | **12** | **13** | **Vergleich 1** | **Vergleich 2** | **Vergleich 3** |
|---|---|---|---|---|---|---|---|---|---|
| Pendelhärte (s) auf Glas | 143 | 196 | 199 | 189 | 187 | 171 | 182 | 197 | 25 |
| FAM/XYLOL/min | 2 / 2 | 2 / 2 | 2 / 2 | 2 /2 | 2 / 2 | 2/ 2 | 2 / 2 | 2 / 2 | 2 / 2 |
| Haze | 9 | 9 | 9 | 9 | 9 | 8 | 11 | 10 | 13 |
| Kratzfestigkeit | | | | | | | | | |
| Glanz vorher (20°) | 86 | 89 | 89 | 89 | 89 | 87 | 91 | 92 | 79 |
| Glanz nach 10 Zyklen (20°) | 76 | 62 | 61 | 64 | 63 | 68 | 58 | 52 | 77 |
| Rel. Restglanz (%) | 87 | 69 | 68 | 72 | 71 | 78 | 63 | 56 | 97 |
| Glanz nach 2h 60°C Reflow | 80 | 79 | 79 | 79 | 78 | 78 | 75 | 76 | 77 |
| Rel. Restglanz n. Reflow (%) | 92 | 89 | 89 | 89 | 88 | 90 | 82 | 82 | 97 |
| **Chemikalienbeständigkeit** | | | | | | | | | |
| Baumharz | 36 | 40 | 40 | 36 | 36 | 36 | 36 | 38 | 36 |
| Pankreatin | 36 | 36 | 36 | 36 | 36 | 36 | 36 | 36 | 36 |
| VE-Wasser | 42 | 42 | 45 | 45 | 42 | 42 | 40 | 44 | 36 |
| NaOH,1% | 42 | 48 | 44 | 48 | 52 | 54 | 42 | 42 | 42 |
| H₂SO₄ 1% | 44 | 44 | 45 | 44 | 45 | 43 | 41 | 45 | 36 |

### Prüfmethoden:

### Pendelhärte:

Die Pendelhärte wurde gemäß der DIN EN ISO 1522 bestimmt.

### Beständigkeit gegen Benzin:

Prüfung mit FAM-Prüfkraftstoff nach DIN 51 635, in Anlehnung an VDA 621-412 (Prüfung A 4.1.1 Y und 4.1.3 Y) und Xyol; Belastungsdauer 10 min:

### Kratzfestigkeit:

Die Kratzfestigkeit wurde gemäß der DIN 55668 - Methode zur "Prüfung der Kratzfestigkeit von Beschichtungen mit einer Laborwaschanlage" bestimmt. Messung des Glanzgrades als Reflektometerwert gemäß DIN 67 530 vor und nach der Beanspruchung durch 10 Doppelhübe sowie nochmals nach 2 h Lagerung bei 60 °C (Reflow-Verhalten).

### Chemikalienbeständigkeit:

Die Chemikalienbeständigkeit wurde gemäß DIN EN ISO 2812/5 (Entwurf) im Gradientenofen ermittelt.

Die erfindungsgemäßen Beschichtungen gemäß Beispiel 8 bis 13 weisen eine verbesserte Kratzbeständigkeit - sowohl vor als auch nach Reflow - auf als die Vergleichsbeispiele 1 und 2. Die Chemikalienbeständigkeit und besonders die Säurebeständigkeit der erfindungsgemäßen Beschichtungen ist dabei in Summe besser als die der aufgeführten Vergleichsbeispiele.

## Patentansprüche

1. Beschichtungsmittel, enthaltend
A) eine Polyolkomponente, die aus
a) 1 bis 50 Gew.-% an aliphatischen Oligocarbonatpolyolen mit einem zahlenmittleren Molekulargewicht Mₙ von 200 bis 2 000 g/mol und
b) 50 bis 99 Gew.-% an hydroxyfunktionellen Polyacrylatpolyolen
besteht und
B) ein oder mehrere gegenüber ON-Gruppen reaktive (Poly)Isocyanatvernetzer mit einer mittleren NCO-Funktionalität von ≥ 2,0.

2. Beschichtungsmittel gemaß Anspruch 1, **dadurch gekennzeichnet, dass** die Menge der Komponente a) 1 bis 10 Gew.-% und der Komponente b) 90 bis 99 Gew.-% beträgt.

3. Beschichtungsmittel gemäß Anspruch 1 oder 2, **dadurch gekennzeichnet, dass** in a) aliphatische Oligocarbonatpolyole basierend auf 1,4-Butandiol, 1,6-Hexandiol, 3-Methyl-1,5-Pentandiol, Cyctohexandimethanol oder deren Mischungen eingesetzt werden.

4. Beschichtungsmittel gemäß einem der Ansprüche 1 bis 3, **dadurch gekennzeichnet, dass** in b) Copolymerisate aus
b1) 0,4 bis 5 Gew.-% eines oder mehrerer, gegebenenfalls funktioneller, Polybutadiene mit einem zahlenmittleren Molekulargewicht von 500 bis 2.000 g/mol und mit einem Anteil an 1,2-seitenständigen vinylischen Doppelbindungen von mindestens 40 Mol.-% bezogen auf alle enthaltenen vinylischen Doppelbindungen des Polybutadiens,
b2) 5 bis 20 Gew.-% Styrol,
b3) 30 bis 60 Gew.-% Hydroxyethylacrylat, Hydroxyethylmethacrylat oder deren Mischungen,
b4) 0 bis 15 Gew.-% einer oder mehrerer Verbindungen der Gruppe bestehend aus Isobornylacrylat, Isobornylmethacrylat, Cyclohexyl(meth)acrylat, 3,5,5-Trimethyl-cyclohexyl(meth)acrylat und 4-tert.-Butylcyclohexyl(meth)acrylat,
b5) 25 bis 45 Gew.-% eines oder mehrerer Esters aus Acryl- oder Methacrylsäure und aliphatischen C₁ bis C₄ Monoalkoholen,
b6) 0,5 bis 2 Gew.-% Acrylsäure, Methacrylsäure oder deren Mischungen und
b7) 0 bis 15 Gew.-% einer oder mehrerer der Verbindungen der Gruppe bestehend aus Hydroxypropyl(meth)acrylat, Vinylester aliphatischer, gegebenenfalls verzweigter C₁ bis C₉ Monocarbonsäuren, Dialkyl- oder Di(cyclo)alkylester aus Malein- oder Fumarsäure und C₃ bis C₆ Monoalkoholen,
eingesetzt werden, wobei die Summe der Gew.-% der Komponenten b1) bis b7) 100 Gew.-% beträgt.

5. Beschichtungsmittel gemäß einem der Ansprüche 1 bis 4, **dadurch gekennzeichnet, dass** die in b) eingesetzten Copolymere eine Uneinheitlichkeit (M_{w}/Mₙ)-1 ≤ 2,5 aufweisen.

6. Beschichtungsmittel gemäß einem der Ansprüche 1 bis 5, **dadurch gekennzeichnet, dass** die Polyolkomponente A) durch Polymerisation der entsprechenden Monomere des Copolymerisats b) in den aliphatischen Oligocarbonatpolyolen a) hergestellt wird.

7. Beschichtungsmittel gemäß einem der Ansprüche 1 bis 6, **dadurch gekennzeichnet, dass** in B) Polyisocyanate bzw. Polyisocyanatgemische mit Isocyanuratstruktur auf Basis von HDI, IPDI und/oder 4,4'-Diisocyanatodicyclohexylmethan eingesetzt werden.

8. Beschichtungsmittel gemäß einem der Ansprüche 1 bis 7, **dadurch gekennzeichnet, dass** das NCO/OH-Verhältnis der freien und gegebenenfalls blockierten NCO-Gruppen zu den isocyanatreaktiven Gruppen 0,5 bis 1,2 ist.

9. Beschichtungen erhältlich unter Verwendung der Beschichtungsmittel gemäß einem der Ansprüche 1 bis 8.

10. Substrate beschichtet mit Beschichtungen gemäß Anspruch 9.

## Claims

1. Coating compositions comprising
A) a polyol component composed of
a) 1% to 50% by weight of aliphatic oligocarbonate polyols having a number-average molecular weight Mₙ of 200 to 2000 g/mol and
b) 50% to 99% by weight of hydroxy-functional polyacrylate polyols
and
B) one or more OH-reactive (poly)isocyanate crosslinkers having an average NCO functionality of ≥ 2.0.

2. Coating compositions according to Claim 1, **characterized in that** the amount of component a) is 1% to 10% by weight and the amount of component b) is 90% to 99% by weight.

3. Coating compositions according to Claim 1 or 2, **characterized in that** in a) aliphatic oligocarbonate polyols based on 1,4-butanediol, 1-6-hexanediol, 3-methyl-1,5-pentanediol, cyclohexanedimethanol or mixtures thereof are used.

4. Coating compositions according to one of Claims 1 to 3, **characterized in that** in b) copolymers of
b1) 0.4% to 5% by weight of one or more, optionally functional, polybutadienes having a number-average molecular weight of 500 to 2000 g/mol and having a 1,2-pendant vinylic double bond fraction of at least 40 mol%, based on all of the vinylic double bonds present in the polybutadiene,
b2) 5% to 20% by weight of styrene,
b3) 30% to 60% by weight of hydroxyethyl acrylate, hydroxyethyl methacrylate or mixtures thereof,
b4) 0 to 15% by weight of one or more compounds from the group consisting of isobornyl acrylate, isobornyl methacrylate, cyclohexyl (meth)acrylate, 3,5,5-trimethylcyclohexyl (meth)acrylate and 4-tert-butylcyclohexyl (meth)acrylate,
b5) 25% to 45% by weight of one or more esters of acrylic or methacrylic acid and aliphatic C₁ to C₄ monoalcohols,
b6) 0.5% to 2% by weight of acrylic acid, methacrylic acid or mixtures thereof and
b7) 0% to 15% by weight of one or more compounds from the group consisting of hydroxypropyl (meth)acrylate, vinyl esters of aliphatic, optionally branched C₁ to C₉ monocarboxylic acids, dialkyl esters or di(cyclo)alkyl esters of maleic or fumaric acid and C₃ to C₆ monoalcohols
are used, the sum of the weight percentages of components b1) to b7) being 100% by weight.

5. Coating compositions according to one of Claims 1 to 4, **characterized in that** the copolymers used in b) have a polydispersity (M_{w}/Mₙ) ≤ 2.5.

6. Coating compositions according to one of Claims 1 to 5, **characterized in that** the polyol component A) is prepared by polymerizing the corresponding monomers of the copolymer b) in the aliphatic oligocarbonate polyols a).

7. Coating compositions according to one of Claims 1 to 6, **characterized in that** in B) polyisocyanates or polyisocyanate mixtures with an isocyanurate structure, based on HDI, IPDI and/or 4,4'-diisocyanatodicyclohexylmethane, are used.

8. Coating compositions according to one of Claims 1 to 7, **characterized in that** the NCO/OH ratio of the free and optionally blocked NCO groups to the isocyanate-reactive groups is 0.5 to 1.2.

9. Coatings obtainable using the coating compositions according to one of Claims 1 to 8.

10. Substrates coated with coatings according to Claim 9.

## Revendications

1. Composition de revêtement, contenant
A) un composant polyol, qui est constitué de
a) 1 à 50 % en poids d'oligocarbonatepolyols aliphatiques ayant une masse moléculaire moyenne en nombre Mₙ de 200 à 2 000 g/mole et
b) 50 à 99 % en poids de polyacrylatepolyols à fonction hydroxy
et
B) un ou plusieurs agents de réticulation (poly)isocyanate réactifs vis-à-vis de groupes OH, ayant une fonctionnalité NCO moyenne de ≥ 2,0.

2. Composition de revêtement selon la revendication 1, **caractérisée en ce que** la quantité du composant a) va de 1 à 10 % en poids et celle du composant b) va de 90 à 99 % en poids.

3. Composition de revêtement selon la revendication 1 ou 2, **caractérisée en ce qu'**on utilise en a) des oligocarbonatepolyols aliphatiques à base de 1,4-butanediol, 1,6-hexanediol, 3-méthyl-1,5-pentanediol, cyclohexanediméthanol ou de mélanges de ceux-ci.

4. Composition de revêtement selon l'une quelconque des revendications 1 à 3, **caractérisée en ce qu'**on utilise en b) des copolymères de
b1) 0,4 à 5 % en poids d'un ou plusieurs polybutadiènes, éventuellement fonctionnels, ayant une masse moléculaire moyenne en nombre de 500 à 2 000 g/mole et ayant une teneur en doubles liaisons vinyliques en position latérale 1,2 d'au moins 40 % en moles par rapport à toutes les doubles liaisons vinyliques contenues du polybutadiène.
b2) 5 à 20 % en poids de styrène,
b3) 30 à 60 % en poids d'acrylate d'hydroxyéthyle, de méthacrylate d'hydroxyéthyle ou de mélanges de ceux-ci,
b4) 0 à 15 % en poids d'un ou plusieurs composés choisis dans le groupe constitué par l'acrylate d'isobornyle, le méthacrylate d'isobornyle, le (méth)acrylate de cyclohexyle, le (méth)acrylate de 3,5,5-triméthylcyclohexyle et le (méth)acrylate de 4-tert-butylcyclohexyle,
b5) 25 à 45 % en poids d'un ou plusieurs esters d'acide acrylique ou méthacrylique et de monoalcools aliphatiques en C₁-C₄,
b6) 0,5 à 2 % en poids d'acide acrylique, d'acide méthacrylique ou de mélanges de ceux-ci et
b7) 0 à 15 % en poids d'un ou plusieurs composés choisis dans le groupe constitué par le (méth)acrylate d'hydroxypropyle, les esters vinyliques d'acides monocarboxyliques en C₁-C₉ aliphatiques, éventuellement ramifiés, les esters dialkyliques ou di(cyclo)alkyliques d'acide maléique ou fumarique et de monoalcools en C₃-C₆,
la somme des pourcentages en poids des composants b1) à b7) étant de 100 % en poids.

5. Composition de revêtement selon l'une quelconque des revendications 1 à 4, **caractérisée en ce que** les copolymères utilisés en b) présentent une hétérogénéité (M_{w}/Mₙ) ≤ 2,5.

6. Composition de revêtement selon l'une quelconque des revendications 1 à 5, **caractérisée en ce que** le composant polyol A) est préparé par polymérisation des monomères correspondants du copolymère b) dans les oligocarbonatepolyols aliphatiques a).

7. Composition de revêtement selon l'une quelconque des revendications 1 à 6, **caractérisée en ce qu'**on utilise en B) des polyisocyanates ou mélanges de polyisocyanates à structure isocyanurate à base de HDI, IPDI et/ou 4,4'-diisocyanatodicyclohexylméthane.

8. Composition de revêtement selon l'une quelconque des revendications 1 à 7, **caractérisée en ce que** le rapport NCO/OH des groupes NCO libres et éventuellement bloqués aux groupes réactifs avec des isocyanate vaut de 0,5 à 1,2.

9. Revêtement pouvant être obtenu avec utilisation des compositions de revêtement selon l'une quelconque des revendications 1 à 8.

10. Subjectile revêtu avec des compositions de revêtement selon la revendication 9.
